# EUROPEAN PATENT APPLICATION

(11) **EP 1 232 951 A2**
(43) Date of publication of application: **21.08.2002**
(21) Application number: 02075647.4
(22) Date of filing: 15.02.2002
(51) Int. Cl.: B65D 1/26, B65D 25/54, B29C 51/10

(54) **Thin-walled packaging and method of manufacturing same**

(30) Priority: 15.02.2001 NL 1017369
(71) Applicant: Kolkman Verpakkingen Hdel B.V., 5321 JJ Hedel (NL)
(72) Inventor: Kolkman, Jan Hendrik, 5321 JJ Hedel (NL)
(74) Representative: Bartelds, Erik

(57) **Abstract**

The invention relates to a thin-walled packaging, comprising a bottom (4) and a peripheral wall (8,9) extending upwardly from the bottom, the bottom and/or the peripheral wall being at least partly made of a foil material and comprising at least two parts having different colours. Such a packaging is more attractive than a plain packaging.

One of the parts may be translucent or even transparent and the other part may be opaque, so that the contents of the packaging may be viewed.

The parts having different colours may be integrally made.

The invention further relates to a method of forming such a multi-coloured thin-walled packaging.

## Description

The invention relates to a thin-walled packaging, comprising a bottom and a peripheral wall extending upwardly from the bottom, the bottom and/or the peripheral wall being at least partly made of a foil material. Such a packaging is generally known and is specifically used for packing vegetables or fruits. A well-known example is a mushroom packaging.

The known packaging comprises a container constituted by a bottom and four upright walls, which may be closed off by a thin-walled cover or a supple foil material stretched across. In case of a packaging for mushrooms the container usually has a dark colour, e.g. plain dark blue, in order to prevent as much as possible premature ageing of the packed produce under the impact of light.

The known packaging has a number of drawbacks. The container in its dark colour has a comparatively dull and dreary look, so that no great consumer interest is not stirred up. Moreover, the packed produce is not properly visible to consumers due to the dark walls of the container.

The invention therefore aims to provide a packaging of this type in which these drawbacks are obviated. In accordance with the invention, this is accomplished in such a packaging in that the bottom and/or the peripheral wall comprise(s) at least two parts having different colours.

By realizing the packaging in different colours the produce may be presented in a manner that is attractive to consumers.

When one of the parts is translucent and the other part is opaque, the contents of the packaging, or at least the degree to which the packaging is filled is clearly visible to consumers.

An aesthetically beautiful and structurally simple packaging is achieved, when the differently coloured parts are integrally made.

For obtaining a clear view of an important part of the contents of the packaging the part having the one colour preferably constitutes a strip in the part having the other colour.

If the translucent part is in fact transparent, not only the degree of filling of the packaging, but also the quality of the packed produce can be checked at a glance by consumers.

The invention also relates to a method of forming a thin-walled packaging, comprising guiding a foil along a mould, drawing the foil into or onto the mould through suction and fixing the foil in the shape thus attained by heating and cooling. Such a method is also generally known and is used for producing conventional thin-walled packagings. The invention has for its aim to improve this method such that packagings of the type described above may be manufactured. In accordance with the invention, this is accomplished in that the foil comprises at least two parts having different colours.

Preferred embodiments of the method according to the invention are defined in dependent claims 7 to 10.

The invention will now be illustrated by way of an example, with reference being made to the annexed drawings, in which:
Fig. 1 is a schematic perspective view of a packaging in accordance with the invention, and
Fig. 2 schematically illustrates a number of steps of the method of the invention for forming such a packaging.

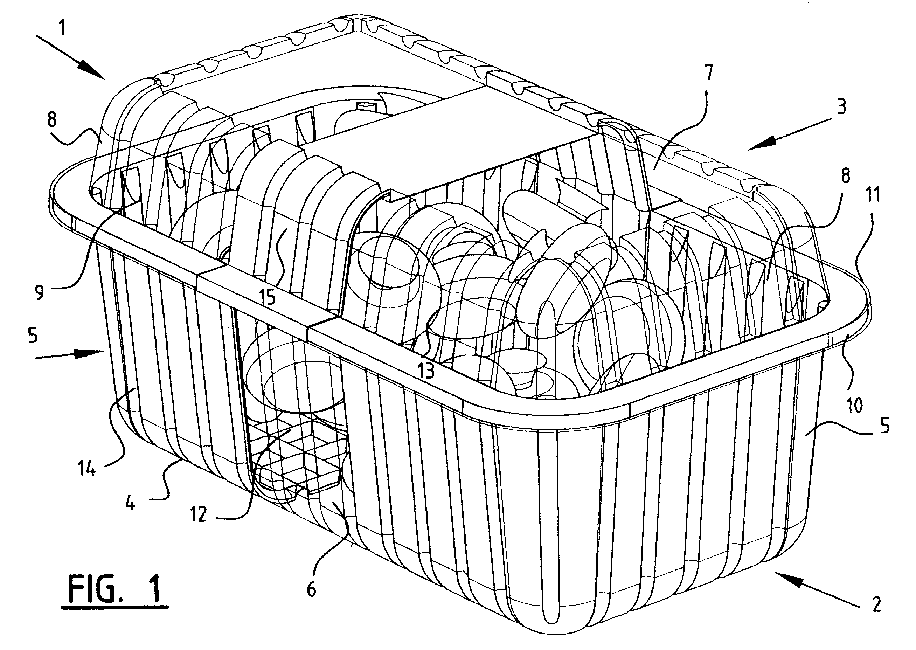

A packaging 1 consists of a container 2 and a cover 3 fixed thereon by means of snapping or welding (fig. 1). Container 2 is formed by a bottom 4, two short sidewalls 5 and two long sidewalls 6. Cover 3 consists of a top 7, two short sidewalls 8 and two long sidewalls 9. Container 2 and cover 3 are each provided with a peripheral flange 10 and 1, respectively. These flanges 10, 11 are attached to each other in the way described above.

In the illustrated embodiment both container 2 and cover 3 include parts 12 and 13, respectively, in a first colour and parts 14 and 15, respectively, in a second colour differing therefrom. By using different colours the appearance of the packaging is touched up. In the shown example the colours are selected such that parts 12, 13 are translucent, while parts 14, 15 are not. In this way the contents of the packaging may be determined through translucent parts 12, 13, while opaque parts 14, 15 largely protect the contents from ageing under the impact of light. In this example translucent part 12 of container 2, which might even be transparent, constitutes a band bordered on both sides by the opaque parts 14. In cover 3 the opaque part 15 forms a band between the translucent parts 13.

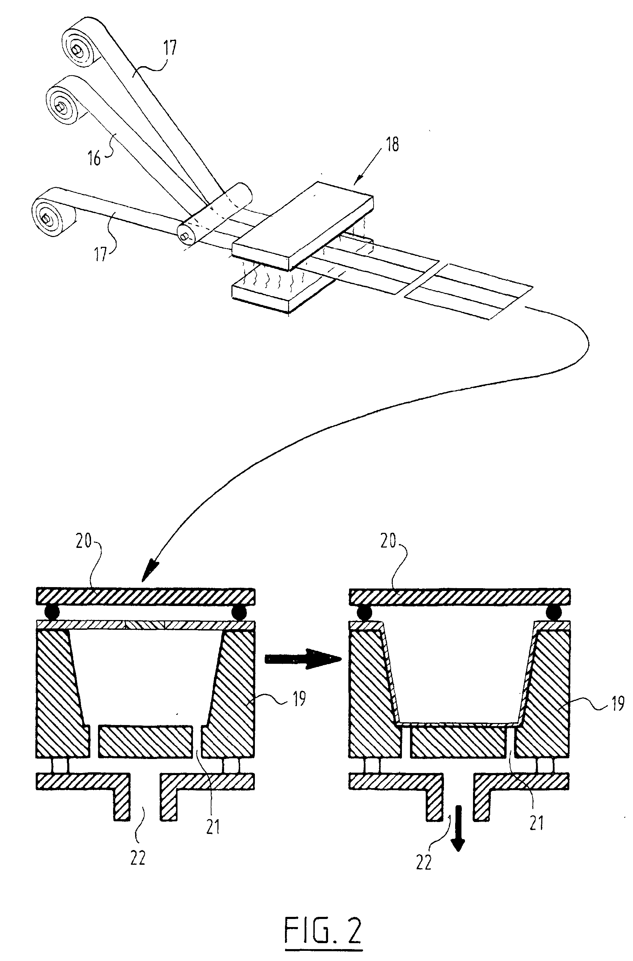

The parts having different colours, in this case the translucent and opaque parts, are integrally formed from thermoplastic synthetic foil. To this end the differently coloured strips of foil 16, 17 are first guided side by side through a heating device 18 in which the strips are heated to such a temperature that the foil material is plasticized again (fig. 2). In this plastic condition the edges of adjacent foil strips are brought into contact so that they will become attached to each other.

Subsequently the thus attached foil strips in different colours are guided to a vacuum forming installation, possibly through a pair of pressing rolls (not shown). There a sheet is cut off the attached strips 16, 17 and positioned in a mould 19 that is closed by a cover 20. By evacuating the space within mould 20 through air ducts 21 and a suction opening 22, the foil material is drawn against the walls of mould 20 and thus shaped as a container 2 or cover 3. The shape is then fixed by cooling the foil material to below the plastic temperature, after which the finished product may be removed from the mould.

In this way multi-coloured packagings may swiftly and simply be formed from foil material, these packagings having an attractive appearance, providing sufficient protection for the produce packed therein and offering consumers a clear view of this produce.

Although the invention has been illustrated by reference to an example, it will be apparent that it is not limited thereto. For in stance the shape of the packaging could be varied in different ways, while the packaging could also have more than two different colours. The patterns in which the parts having different colours are arranged may also vary. Moreover, it is not necessary for one of the colours to be selected so light as to render the corresponding part of the packaging completely translucent, as the various colours could also be used only for touching up the appearance of the packaging. Therefore, the scope of the invention is defined exclusively by the annexed claims.

## Claims

1. A thin-walled packaging, comprising a bottom and a peripheral wall extending upwardly from the bottom, the bottom and/or the peripheral wall being at least partly made of a foil material, **characterized in that** the bottom and/or the peripheral wall comprise(s) at least two parts having different colours.

2. The packaging as claimed in claim 1, **characterized in that** one of the parts is translucent and the other part is opaque.

3. The packaging as claimed in claim 1 or 2, **characterized in that** the differently coloured parts are integrally made.

4. The packaging as claimed in any of the preceding claims, **characterized in that** the part having the one colour constitutes a strip in the part having the other colour.

5. The packaging as claimed in any of claims 2 to 4, **characterized in that** the translucent part is in fact transparent.

6. A method of forming a thin-walled packaging, comprising guiding a foil along a mould, drawing the foil into or onto the mould through suction and fixing the foil in the shape thus attained by heating and cooling, **characterized in that** the foil comprises at least two parts having different colours.

7. The method as claimed in claim 6, **characterized in that** the differently coloured parts are integrally made.

8. The method as claimed in claim 6 or 7, **characterized in that** the part having the one colour is made as a strip in the part having the other colour.

9. The method as claimed in claim 7 or 8, **characterized in that** the differently coloured parts are brought together and adjoined along the edges before guiding the foil along the mould.

10. The method as claimed in claim 9, **characterized in that** the differently coloured parts are adjoined by heating.
